# EUROPÄISCHE PATENTSCHRIFT

(11) **EP 4 529 582 B1**
(45) Veröffentlichungstag und Bekanntmachung des Hinweises auf die Patenterteilung: **19.11.2025**
(21) Anmeldenummer: 23713267.5
(22) Anmeldetag: 20.03.2023
(51) Int. Cl.: E05F 1/12

(54) **MÖBELANTRIEB ZUM BEWEGEN EINES RELATIV ZU EINEM MÖBELKORPUS BEWEGBAR GELAGERTEN MÖBELTEILES**
FURNITURE DRIVE FOR MOVING A FURNITURE PART THAT IS MOVABLY MOUNTED RELATIVE TO A FURNITURE BODY
DISPOSITIF D'ENTRAÎNEMENT DE MEUBLE POUR DÉPLACER UNE PIÈCE DE MEUBLE MONTÉE MOBILE PAR RAPPORT À UN CORPS DE MEUBLE

(30) Priorität: 23.05.2022 AT 5008622 U
(43) Veröffentlichungstag der Anmeldung: 02.04.2025
(73) Patentinhaber: JULIUS BLUM GMBH, 6973 Höchst (AT)
(72) Erfinder: PEDROSA FERNANDEZ, Juan Jesus, 6850 Dornbirn (AT)
(74) Vertreter: Torggler & Hofmann Patentanwälte - Innsbruck
(86) Internationale Anmeldenummer: PCT/AT2023/060080
(87) Internationale Veröffentlichungsnummer: WO 2023/225694

(56) Entgegenhaltungen:
- EP-A1- 2 248 981
- WO-A1-2022/099334
- AT-U1- 11 823

## Beschreibung

Die vorliegende Erfindung bezieht sich auf einen Möbelantrieb zum Bewegen eines relativ zu einem Möbelkorpus bewegbar gelagerten Möbelteiles, umfassend:
- eine Einstellvorrichtung mit wenigstens einem drehbar gelagerten Einstellelement,
- einen Übertragungsmechanismus zum Übertragen einer Kraft des Einstellelementes,
- wenigstens eine Überlastsicherung, welche bei einer Drehung des Einstellelementes mit einem Drehmoment, das unterhalb eines vorgegebenen Grenzdrehmomentes liegt, das Einstellelement mit dem Übertragungsmechanismus koppelt und welche bei einer Drehung des Einstellelementes mit einem Drehmoment, das oberhalb des Grenzdrehmomentes liegt, das Einstellelement vom Übertragungsmechanismus entkoppelt, vorzugsweise sodass keine Drehmomentübertragung zwischen dem Einstellelement und dem Übertragungsmechanismus stattfindet.

Im Weiteren betrifft die Erfindung ein Möbel mit einem Möbelkorpus, einem relativ zum Möbelkorpus bewegbar gelagerten Möbelteil und mit einem Möbelantrieb der zu beschreibenden Art.

In der WO 2022/099334 A1 ist ein Möbelantrieb mit einer Stellarmanordnung zum Bewegen eines bewegbaren Möbelteiles und mit einer Einstellvorrichtung zur Einstellung einer Kraft auf die Stellarmanordnung offenbart. Die Einstellvorrichtung umfasst ein drehbares Einstellelement, wobei die Kraft der Federvorrichtung auf die Stellarmanordnung durch Drehung des Einstellelementes einstellbar ist. Der Möbelantrieb umfasst ferner eine Überlastsicherung, welche das Einstellelement von einem Übertragungsmechanismus entkoppelt, sofern das Einstellelement mit einem Drehmoment, welches oberhalb eines vorgegebenen Grenzdrehmomentes liegt, rotiert wird. Diese Überlastsicherung ist insbesondere dann nützlich, wenn das Einstellelement mit einem Drehwerkzeug in Form eines Akkuschraubers mit hohem Drehmoment angetrieben wird. Die Überlastsicherung umfasst eine drehbare Welle mit einer ersten Verzahnung, welche durch die Kraft eines Federelementes in einer axialen Richtung der Welle gegen eine korrespondierende zweite Verzahnung des Einstellelementes gedrückt wird. Nachteilig daran ist, dass die beiden Verzahnungen relativ kompliziert herstellbar sind. Für eine langlebige Funktion der Überlastsicherung sollten die Verzahnungen aus einem Metall bestehen, welches gefräst und gehärtet werden muss. Außerdem erlauben die beiden zusammenwirkenden Verzahnungen nur geringe Toleranzen und müssen daher sehr präzise gefertigt werden. Dies führt selbstverständlich auch zu erhöhten Kosten in der serienmäßigen Herstellung der Möbelantriebe.

Möbelantriebe mit einer Überlastsicherung sind auch in der EP 3 708 753 A1 und in der WO 2020/232483 A1 offenbart.

In der WO 2020/232485 A1 ist ein Möbelantrieb zum Bewegen einer bewegbar gelagerten Möbelklappe offenbart, wobei das Gehäuse des Möbelantriebes in einer Möbelplatte des Möbelkorpus integrierbar ist.

Aufgabe der vorliegenden Erfindung ist es, einen Möbelantrieb der eingangs erwähnten Gattung unter Vermeidung der oben diskutierten Nachteile anzugeben.

Dies wird erfindungsgemäß durch die Merkmale des Anspruchs 1 gelöst. Weitere vorteilhafte Ausführungsbeispiele der vorliegenden Erfindung sind in den abhängigen Ansprüchen definiert.

Gemäß der Erfindung ist vorgesehen, dass die Überlastsicherung ein erstes Bauteil mit einer Längsrichtung und wenigstens ein zweites Bauteil aufweist, welches bei einem Drehmoment, das oberhalb des Grenzdrehmomentes liegt, zumindest in eine Richtung quer zur Längsrichtung des ersten Bauteils relativ zum ersten Bauteil bewegbar ist.

Mit anderen Worten weist die Überlastsicherung zumindest zwei relativ zueinander bewegbare Bauteile auf, welche in einer ersten Betriebsstellung miteinander gekoppelt sind und eine Drehmomentübertragung zwischen diesen Bauteilen hergestellt ist.

Bei einer Drehung des Einstellelementes mit einem Drehmoment oberhalb des Grenzdrehmomentes ist das zweite Bauteil quer zur Längsrichtung des ersten Bauteiles (also in eine radiale Richtung) in eine zweite Betriebsstellung bewegbar, in welcher die beiden Bauteile derart voneinander entkoppelt sind, dass keine Drehmomentübertragung stattfindet. Dies hat den Vorteil, dass die beiden Bauteile der Überlastsicherung nicht in einer axialen Richtung durch das Federelement aneinander gedrückt werden müssen. Stattdessen wird das zweite Bauteil im Überlastfall in eine radiale Richtung relativ zur Längsachse des ersten Bauteiles ausgelenkt.

Es kann vorgesehen sein, dass das erste Bauteil und das zweite Bauteil als voneinander separate Bauteile ausgebildet sind oder zusammen einstückig ausgebildet sind. Vorzugsweise kann vorgesehen sein, dass das erste Bauteil und das zweite Bauteil über wenigstens ein Filmscharnier miteinander verbunden sind.

Gemäß einer Ausführungsform kann vorgesehen sein, dass wenigstens ein Halteelement vorgesehen ist, welches das erste Bauteil und das zweite Bauteil bei einem Drehmoment, das unterhalb des Grenzdrehmomentes liegt, relativ zueinander in einer Koppelstellung hält.

Gemäß einem weiteren Ausführungsbeispiel kann vorgesehen sein, dass das wenigstens eine Halteelement wenigstens ein Federelement umfasst, welches das zweite Bauteil in Richtung des ersten Bauteils mit einer Kraft beaufschlagt.

Der Möbelantrieb kann zum Antrieb von bewegbaren Möbelteilen, insbesondere Türen, Klappen oder Schubladen, oder auch zum Antrieb von anderen bewegbaren Elementen, beispielsweise Fenstern, eingesetzt werden.

Weitere Einzelheiten und Vorteile der vorliegenden Erfindung werden anhand der nachfolgenden Figurenbeschreibung erläutert.
- Fig. 1a, 1b: zeigen ein Möbel mit einem bewegbaren Möbelteil in einer perspektivischen Ansicht und in einer Explosionsdarstellung,
- Fig. 2a, 2b: zeigen zwei verschiedene perspektivische Ansichten eines Möbelantriebes,
- Fig. 3a, 3b: zeigen den Möbelantrieb in einer Schließstellung und in einer Offenstellung,
- Fig. 4a, 4b: zeigen eine Einstellvorrichtung mit einer Überlastsicherung in zwei verschiedenen Ansichten,
- Fig. 5a-5d: zeigen die Überlastsicherung in einer Koppelstellung in verschiedenen Ansichten,
- Fig. 6a-6c: zeigen die Überlastsicherung in einer Entkoppelstellung in zwei verschiedenen Ansichten sowie die Überlastsicherung in einer Explosionsdarstellung.

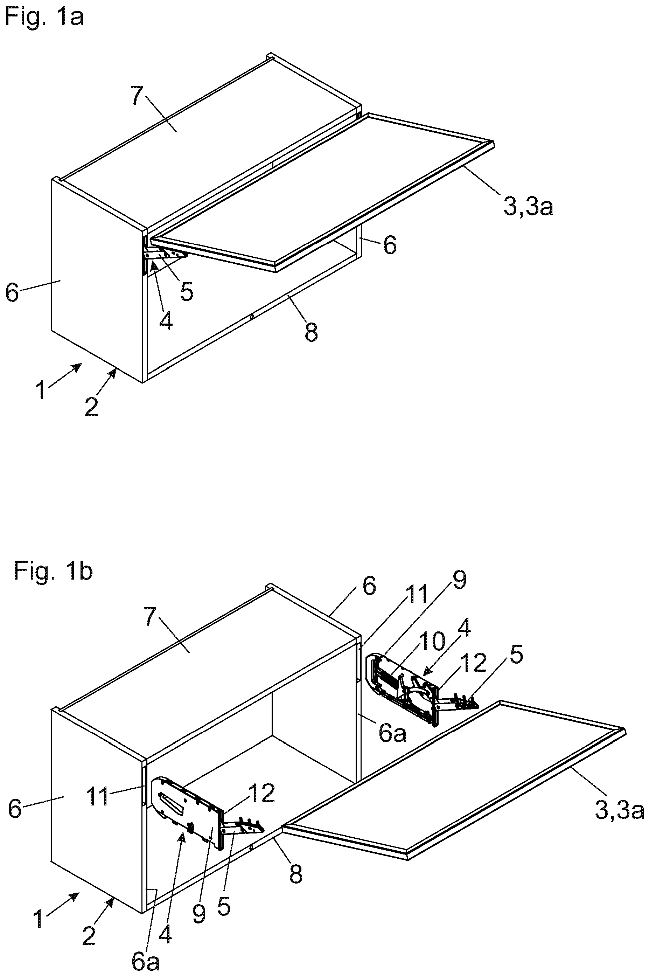

Fig. 1a zeigt eine perspektivische Ansicht eines Möbels 1, welches einen Möbelkorpus 2, ein relativ zum Möbelkorpus 2 bewegbar gelagertes Möbelteil 3 und zumindest einen Möbelantrieb 4 zum Bewegen des bewegbaren Möbelteiles 3 aufweist. Das Möbel 1 weist Möbelplatten 6 in Form von Seitenwänden, einen Oberboden 7 und einen Unterboden 8 auf. Das Möbelteil 3 ist im gezeigten Ausführungsbeispiel als eine relativ zum Möbelkorpus 2 anhebbare Möbelklappe 3a ausgebildet.

Im gezeigten Ausführungsbeispiel ist der Möbelantrieb 4 zumindest teilweise, vorzugsweise im Wesentlichen vollständig, in einer Möbelplatte 6 des Möbelkorpus 2 integriert. Natürlich ist der Möbelantrieb 4 auch außerhalb einer Wandstärke der Möbelplatte 6 anordenbar.

Das bewegbare Möbelteil 3 ist zwischen einer den Möbelkorpus 2 verdeckenden Schließstellung und einer relativ zum Möbelkorpus 2 angehobenen Offenstellung bewegbar gelagert.

Selbstverständlich ist es auch möglich, den Möbelantrieb 4 in einer horizontal verlaufenden Möbelplatte zu integrieren, also beispielweise im Oberboden 7, im Unterboden 8 und/oder in einem zwischen dem Oberboden 7 und dem Unterboden 8 angeordneten Regalbrett. In einem solchen Fall ist das bewegbare Möbelteil 3 relativ zum Möbelkorpus 2 um eine in Montagelage vertikal verlaufende Achse schwenkbar gelagert.

Der Möbelantrieb 4 weist eine Stellarmanordnung 5 zum Bewegen des bewegbaren Möbelteiles 3 und wenigstens eine Federvorrichtung 10 (Fig. 1b) zur Kraftbeaufschlagung der Stellarmanordnung 5 auf.

Fig. 1b zeigt das Möbel 1 in einer Explosionsdarstellung, wobei zwei, vorzugsweise identisch ausgebildete, Möbelantriebe 4 zum Bewegen des bewegbaren Möbelteiles 3 vorgesehen sind. Die Möbelantriebe 4 weisen jeweils ein am Möbelkorpus 2 zu befestigendes Gehäuse 9 auf.

Gemäß einem Ausführungsbeispiel kann vorgesehen sein, dass das Gehäuse 9 in einem Montagezustand zumindest bereichsweise, vorzugsweise im Wesentlichen vollständig, innerhalb einer Aussparung 11 der als Möbelplatten 6 ausgebildeten Seitenwände aufgenommen ist. In einem montierten Zustand kann das Gehäuse 9 mit einer Stirnseite 6a der Möbelplatte 6 im Wesentlichen bündig abschließen.

Die Aussparung 11 ist beispielsweise als Sackloch ausgebildet, wobei das Gehäuse 9 bei der Montage von vorne her (d.h. ausgehend von der schmalen Stirnseite 6a der Möbelplatte 6) in die taschenförmige Aussparung 11 der Möbelplatte 6 einschiebbar ist.

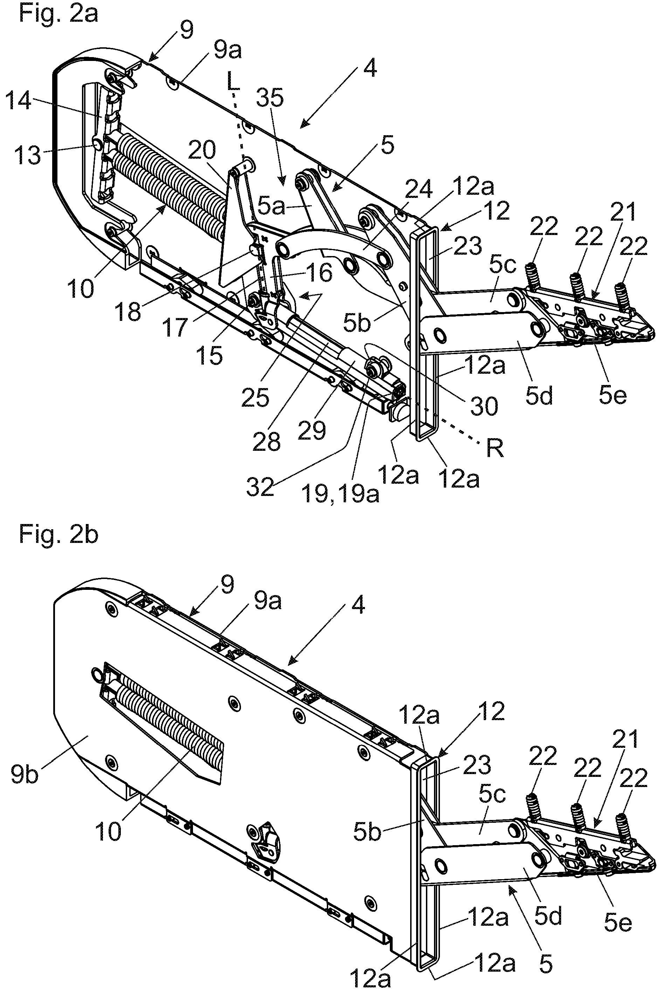

Am vorderen Endbereich des Gehäuses 9 ist eine Abdeckung 12 vorgesehen, wobei zumindest ein bewegbar gelagerter Stellarm 5a, 5b, 5c, 5d, 5e (Fig. 2a) der Stellarmanordnung 5 in einer Relativstellung durch die Abdeckung 12 hindurch führbar ist.

Fig. 2a zeigt den Möbelantrieb 4 in einer perspektivischen Ansicht, wobei das Gehäuse 9 wenigstens eine flach ausgebildete und an den Möbelkorpus 2 anlegbare Gehäusewand 9a aufweist. An der Gehäusewand 9a ist ein schwenkbarer Lagerteil 14 vorgesehen, welcher um eine am Gehäuse 9 ortsfeste Gelenkachse 13 schwenkbar gelagert ist. Die Federvorrichtung 10 ist also mit einem ersten Endbereich an der ortsfesten Gelenkachse 13 abstützbar. Die Federvorrichtung 10 kann zumindest eine Schraubenfeder, vorzugsweise wenigstens eine Druckfeder, oder alternativ eine Gasdruckfeder umfassen.

Der Möbelantrieb 4 weist einen Übertragungsmechanismus 35 auf, welcher beispielsweise zum Übertragen einer Kraft von der Federvorrichtung 10 auf die Stellarmanordnung 5 vorgesehen sein kann.

Im gezeigten Ausführungsbeispiel wirkt ein zweiter Endbereich der Federvorrichtung 10 auf ein Druckstück 20, welches über eine einstellbare Angriffsstelle 18 mit einem um eine, vorzugsweise ortsfeste, Gelenkachse 15 schwenkbaren Zwischenhebel 16 gelenkig verbunden ist.

Durch eine Einstellvorrichtung 19 ist eine Kraft der Federvorrichtung 10 auf die Stellarmanordnung 5 einstellbar. Die Einstellvorrichtung 19 umfasst ein um eine Drehachse R drehbares Einstellelement 19a, wobei eine Lage der Angriffsstelle 18 der Federvorrichtung 10 relativ zur Stellarmanordnung 5, vorzugsweise entlang eines Gewindeabschnittes 17, durch eine Verdrehung des Einstellelementes 19a um die Drehachse R einstellbar ist.

Der Gewindeabschnitt 17 weist eine Längsrichtung L auf. Der Winkel, den die Längsrichtung L des Gewindeabschnittes 17 und die Drehachse R des Einstellelementes 19a zueinander einschließen, ist bei einer Bewegung der Stellarmanordnung 5 veränderbar. Durch eine winkelbewegliche Kupplungsvorrichtung 25 ist eine Drehbewegung des Einstellelementes 19a auf den Gewindeabschnitt 17 übertragbar, sodass der Gewindeabschnitt 17 in eine Rotationsbewegung versetzt und dadurch die Angriffsstelle 18 entlang des Gewindeabschnittes 17 bewegt wird.

Die winkelbewegliche Kupplungsvorrichtung 25 kann zumindest ein elastisches Glied, vorzugsweise einen Faltenbalg, ein Gummiformelement, eine Schraubenfederkupplung, und/oder zumindest ein Getriebe, vorzugsweise ein Kegelradgetriebe, und/oder ein Gelenk, vorzugsweise ein Kreuzgelenk oder Kardangelenk, aufweisen. Durch die winkelbewegliche Kupplungsvorrichtung 25 ist eine besonders kompakte Anordnung möglich, weil die Bauteile des Möbelantriebes 4 ineinander verschachtelbar sind.

Vorzugsweise ist vorgesehen, dass das Einstellelement 19a der Einstellvorrichtung 19 in einem montierten Zustand des Möbelantriebes 4 dem bewegbaren Möbelteil 3 zugewandt und in einem vorderen Bereich des Gehäuses 9 angeordnet ist. Auf diese Weise ist das Einstellelement 19a durch ein Werkzeug von vorne her bequem zu betätigen.

Im gezeigten Ausführungsbeispiel ist zumindest eine durch das Einstellelement 19a antreibbare Welle 28 zum Antreiben des Gewindeabschnittes 17 vorgesehen, wobei die zumindest eine Welle 28 in oder entlang einer Führung 30, vorzugsweise einem Langloch, relativ zum Gehäuse 9 verschiebbar gelagert ist. Auf diese Weise sind Ausgleichsbewegungen von Bauteilen des Möbelantriebes 4, welche durch die winkelbewegliche Kupplungsvorrichtung 25 verursacht werden, zumindest teilweise kompensierbar.

Die Welle 28 ist in oder an einer Lagervorrichtung 29 angeordnet, wobei die Führung 30 an der Lagervorrichtung 29 angeordnet ist und ein am Gehäuse 9 ortsfest gelagerter Stift 32 in die Führung 30 der Lagervorrichtung 29 eingreift. Bei einer Ausgleichsbewegung ist die Lagervorrichtung 29 relativ zum feststehenden Stift 32 bewegbar.

Die Stellarmanordnung 5 umfasst zumindest einen Stellarm 5a, 5b, 5c, 5d, 5e, vorzugsweise mehrere Stellarme 5a, 5b, 5c, 5d, 5e, zum Bewegen des bewegbaren Möbelteiles 3. Am bewegbaren Möbelteil 3 ist ein Beschlagteil 21 zu befestigen, wobei das Beschlagteil 21 zumindest eine oder mehrere Befestigungsstellen 22 aufweist und mit einem Stellarm 5e der Stellarmanordnung 5 lösbar verriegelbar ist. In der Fig. 2a ist der verriegelte Zustand zwischen dem Stellarm 5e und dem Beschlagteil 21 gezeigt.

Am vorderen Ende der Gehäusewand 9a ist eine Abdeckung 12 vorgesehen, welche zumindest einen seitlich vorspringenden Flansch 12a aufweist. Im gezeigten Ausführungsbeispiel ist der Flansch 12a im Wesentlichen ringförmig ausgebildet und bildet einen an einer Stirnseite 6a der Möbelplatte 6 anlegbaren Tiefenanschlag für das Gehäuse 9 aus.

Fig. 2b zeigt den Möbelantrieb 4 gemäß Fig. 2a, wobei das Gehäuse 9 durch eine zweite Gehäusewand 9b verschlossen ist. Die erste Gehäusewand 9a und die zweite Gehäusewand 9b sind jeweils flach und zur Anlage an einem Möbelkorpus 2 ausgebildet und formen gemeinsam ein im Wesentlichen quaderförmiges Gehäuse 9 aus. Die Gehäusewände 9a, 9b sind parallel zueinander beabstandet, wobei zwischen den Gehäusewänden 9a, 9b eine frontseitige Öffnung 23 gebildet ist.

Die Abdeckung 12 ist im Bereich dieser Öffnung 23 angeordnet und gestattet einen Durchtritt eines Werkzeuges zum Betätigen der Einstellvorrichtung 19.

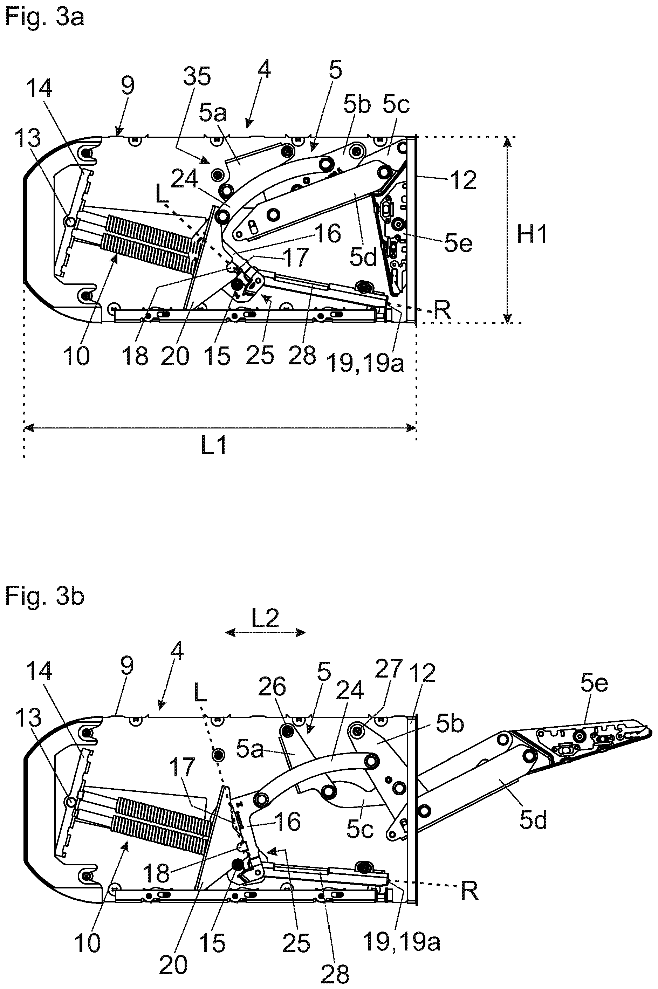

Fig. 3a zeigt den Möbelantrieb 4 mit dem Gehäuse 9 in einer Seitenansicht. Der Gewindeabschnitt 17 ist an einem Zwischenhebel 16 angeordnet, welcher um eine ortsfest am Gehäuse 9 angeordnete Gelenkachse 15 schwenkbar gelagert ist. In der gezeigten Figur übt die Federvorrichtung 10 ein minimales Drehmoment auf die Stellarmanordnung 5 aus, weil sich die Angriffsstelle 18 der Federvorrichtung 10 in einem zur Gelenkachse 15 des Zwischenhebels 16 benachbarten Bereich befindet. Eine gedachte Verbindungslinie zwischen der Gelenkachse 15 des Zwischenhebels 16 und der Angriffsstelle 18 der Federvorrichtung 10 bildet einen relativ kurzen Hebelarm, wodurch ein minimales Drehmoment auf die Stellarmanordnung 5 wirkt.

Die Drehachse R des Einstellelementes 19a der Einstellvorrichtung 19 und die Längsrichtung L des Gewindeabschnittes 17 schließen einen Winkel zueinander ein, welcher bei einer Bewegung der Stellarmanordnung 5 veränderbar ist. Ein Vorteil dieser Konstruktion ist anhand der Fig. 3a gut zu erkennen, da in der gezeigten Schließstellung des Möbelantriebes 4 - aufgrund der winkelbeweglichen Anordnung der Drehachse R und der Längsrichtung L - die Stellarme 5a-5e der Stellarmanordnung 5 zusammen mit der Federvorrichtung 10 und der Einstellvorrichtung 19 eine sehr kompakte Stellung zueinander einnehmen.

Das Einstellelement 19a und der rotierbare Gewindeabschnitt 17 sind also bei einer Bewegung der Stellarmanordnung 5 relativ zueinander winkelbeweglich gelagert, sodass die Einstellvorrichtung 19 zur Einstellung einer Kraft der Federvorrichtung 10 und die Stellarmanordnung 5 unterschiedliche Positionen zueinander einnehmen können. Die Bauteile des Möbelantriebes 4 sind dadurch ineinander verschachtelbar und folglich enger zueinander anordenbar. Auf diese Weise kann der Möbelantrieb 4 kompakter gebaut, der Einstellweg der Federvorrichtung 10 am Gewindeabschnitt 17 erhöht und höhere Leistungsbereiche des Möbelantriebes 4 abgedeckt werden.

Das Gehäuse 9 kann im Wesentlichen rechteckförmig ausgebildet sein, wobei vorzugsweise vorgesehen ist, dass das Verhältnis einer Länge L1 des Gehäuses 9 zu einer Höhe H1 des Gehäuses 9 größer als 1 zu 0,7, vorzugsweise größer als 1 zu 0,5, ist. Durch eine solche Dimensionierung kann eine reduzierte Höhe H1 des Gehäuses 9 erreicht werden. Dadurch kann auch die Höhe der Aussparung 11 (Fig. 1b) der Möbelplatten 6 gering dimensioniert werden, wobei der Herstellungsaufwand der Aussparung 11 und eine Schwächung der Möbelplatte 6 gering ausfallen.

Fig. 3b zeigt den Möbelantrieb 4 gemäß Fig. 3a mit einer minimalen Krafteinstellung der Federvorrichtung 10, wobei sich die Stellarmanordnung 5 mit den Stellarmen 5a-5e in einer Offenstellung befindet. Zu erkennen ist, dass sich der Winkel, welcher die Drehachse R des Einstellelementes 9 und die Längsrichtung L des Gewindeabschnittes 17 zueinander einschließen, in Bezug auf die in Fig. 3a gezeigte Schließstellung verkleinert hat.

Die Stellarmanordnung 5 weist einen um eine erste Gelenkachse 26 schwenkbaren ersten Stellarm 5a und zumindest einen um eine zweite Gelenkachse 27 schwenkbar gelagerten zweiten Stellarm 5b auf. Die erste Gelenkachse 26 und die zweite Gelenkachse 27 sind in einer Längsrichtung L2 des Gehäuses 9 voneinander beabstandet, wobei die zweite Gelenkachse 27 in Bezug zur ersten Gelenkachse 26 in einem vorderen Bereich des Gehäuses 9 angeordnet ist.

Der Zwischenhebel 16 ist über einen, vorzugsweise bogenförmig ausgebildeten, Schubhebel 24 mit dem zweiten (vorderen) Stellarm 5b direkt verbunden. Der erste Stellarm 5a ist also mit dem Schubhebel 24 über keine Gelenkachse direkt verbunden, sondern wird stattdessen innerhalb des Schubhebels 24 verschiebbar geführt. Dies geht aus Fig. 2a gut erkennbar hervor. Auf diese Weise wird eine verbesserte und direkte Krafteinleitung der Federvorrichtung 10 in die Stellarmanordnung 5 ermöglicht.

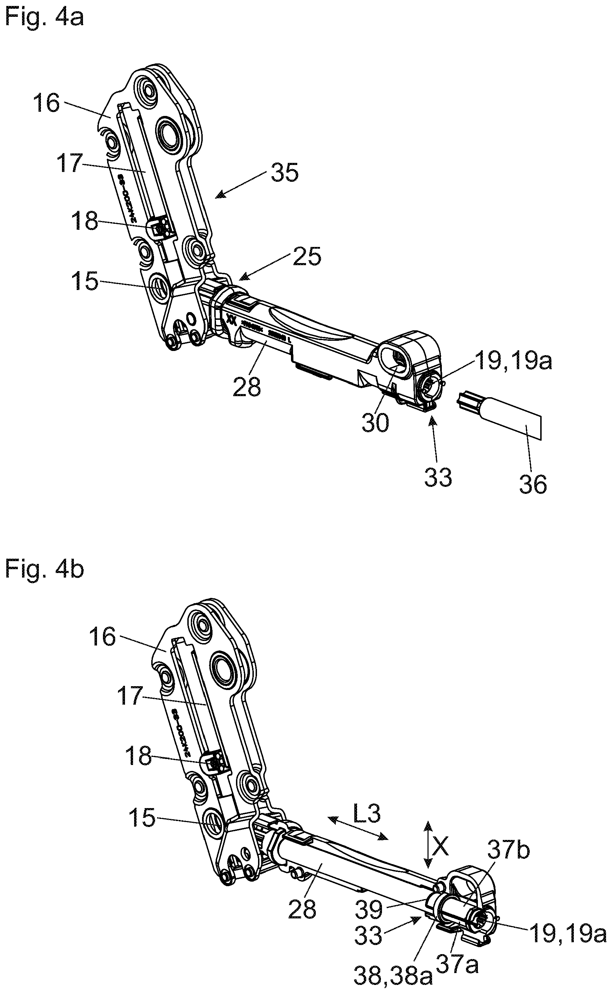

Fig. 4a zeigt die Einstellvorrichtung 19 mit dem drehbaren Einstellelement 19a und einer Überlastsicherung 33. Die Überlastsicherung 33 ist derart ausgebildet, dass bei einer Drehung des Einstellelementes 19a mit einem Drehmoment, das unterhalb eines vorgegebenen Grenzdrehmomentes liegt, das Einstellelement 19a mit dem Übertragungsmechanismus 35 koppelt. Bei einer Drehung des Einstellelementes 19a mit einem Drehmoment, das oberhalb des Grenzdrehmomentes liegt, ist das Einstellelement 19a vom Übertragungsmechanismus 35 durch die Überlastsicherung 33 entkoppelbar.

Durch ein Drehwerkzeug 36, beispielsweise einen Akkuschrauber, ist das Einstellelement 19a antreibbar. Die Drehbewegung des Einstellelementes 19a ist auf die Welle 28 übertragbar, wobei der Gewindeabschnitt 17 über die winkelbewegliche Kupplungsvorrichtung 25 in eine Drehbewegung versetzbar ist. Auf diese Weise ist die Angriffsstelle 18 der Federvorrichtung 10 entlang des Gewindeabschnitts 17 bewegbar. Der Gewindeabschnitt 17 ist im gezeigten Ausführungsbeispiel an dem um die Gelenkachse 15 schwenkbaren Zwischenhebel 16 gelagert.

Fig. 4b zeigt die Ansicht gemäß Fig. 4a, wobei ein Gehäuseteil nicht dargestellt und so die Überlastsicherung 33 näher hervorgeht. Die Überlastsicherung 33 umfasst ein erstes Bauteil 37a mit einer Längsrichtung L3 und ein zweites Bauteil 37b, welche relativ zueinander zwischen einer Koppelstellung und einer Entkoppelstellung bewegbar sind.

Bei einer Drehung des Einstellelementes 19a mit einem Drehmoment, das unterhalb eines vorgegebenen Grenzdrehmomentes liegt, ist das Einstellelement 19a mit dem Übertragungsmechanismus 35 gekoppelt.

Bei einer Drehung des Einstellelementes 19a oberhalb des Grenzdrehmomentes ist das Einstellelement 19a vom Übertragungsmechanismus 35 entkoppelbar, indem das zweite Bauteil 37b zumindest in eine Richtung X quer zur Längsrichtung L3 des ersten Bauteils 37a relativ zum ersten Bauteil 37a bewegbar ist.

Gemäß möglichen Ausführungsbeispielen kann vorgesehen sein, dass das erste Bauteil 37a und/oder das zweite Bauteil 37b
- zumindest abschnittsweise im Wesentlichen zylindrisch ausgebildet sind, und/oder
- gemeinsam eine im Wesentlichen zylindrische Form ausbilden, und/oder
- aus Kunststoff gebildet, und/oder
- in einem Spritzgussverfahren hergestellt sind.

Die beiden Bauteile 37a, 37b können als voneinander separate Bauteile 37a, 37b ausgebildet sein. Gemäß einem alternativen Ausführungsbeispiel können die beiden Bauteile 37a, 37b über wenigstens ein Filmscharnier 39 miteinander verbunden sein.

Im gezeigten Ausführungsbeispiel ist wenigstens ein Halteelement 38 vorgesehen, welches das erste Bauteil 37a und das zweite Bauteil 37b bei einem Drehmoment, das unterhalb des Grenzdrehmomentes liegt, relativ zueinander in einer Koppelstellung hält.

Das wenigstens eine Halteelement 38 kann wenigstens ein Federelement 38a umfassen, welches das zweite Bauteil 37b in Richtung des ersten Bauteiles 37a mit einer Kraft beaufschlagt, vorzugsweise wobei das Federelement 38a
- zumindest abschnittsweise ringförmig ausgebildet ist, und/oder
- als O-Ring ausgebildet ist, und/oder
- zumindest abschnittsweise hohlzylindrisch ausgebildet ist, und/oder
- eine Breite zwischen 0,1 mm und 3,0 mm, vorzugsweise eine Breite von 2,0 mm aufweist, und/oder
- eine Wandstärke zwischen 0,1 mm und 2,0 mm, vorzugsweise eine Wandstärke von 1,0 mm aufweist, und/oder
- einen Außendurchmesser von weniger als 8,0 mm, bevorzugt von weniger als 7,5 mm, besonders bevorzugt von weniger als oder gleich 7,0 mm aufweist, und/oder
- aus Kunststoff, vorzugsweise POM und/oder TPU besteht, und/oder
- in einem Spritzgussverfahren hergestellt ist, und/oder
- zumindest abschnittsweise in eine radiale Richtung, vorzugsweise elastisch, dehnbar ist.

Im gezeigten Ausführungsbeispiel ist das erste Bauteil 37a der Überlastsicherung 33 zusammen mit der Welle 28 einstückig ausgebildet. Das Bauteil 37a und die Welle 28 können aber auch als voneinander gesonderte Bauteile ausgeführt sein.

Das Einstellelement 19a der Einstellvorrichtung 19 kann mit zumindest einem Bauteil 37a, 37b, vorzugsweise mit beiden Bauteilen 37a, 37b, einstückig ausgeführt sein. Daher kann auf die Anordnung eines von den Bauteilen 37a, 37b gesonderten Einstellelementes 19a verzichtet werden. Selbstverständlich kann aber auch ein von den Bauteilen 37a, 37b gesondertes Einstellelement 19a vorgesehen sein.

Gemäß einem Ausführungsbeispiel kann vorgesehen sein, dass das Halteelement 38 zumindest abschnittsweise in Längsrichtung L3 des ersten Bauteiles 37a relativ zum ersten Bauteil 37a und/oder zweiten Bauteil 37b verschiebbar gelagert ist, vorzugsweise wobei das Grenzdrehmoment durch eine Verschiebung des Halteelementes 38 einstellbar ist.

Gemäß einem Ausführungsbeispiel kann vorgesehen sein, dass das Grenzdrehmoment zwischen 0,5 Nm und 4,0 Nm, vorzugsweise zwischen 0,8 Nm und 1,2 Nm, liegt.

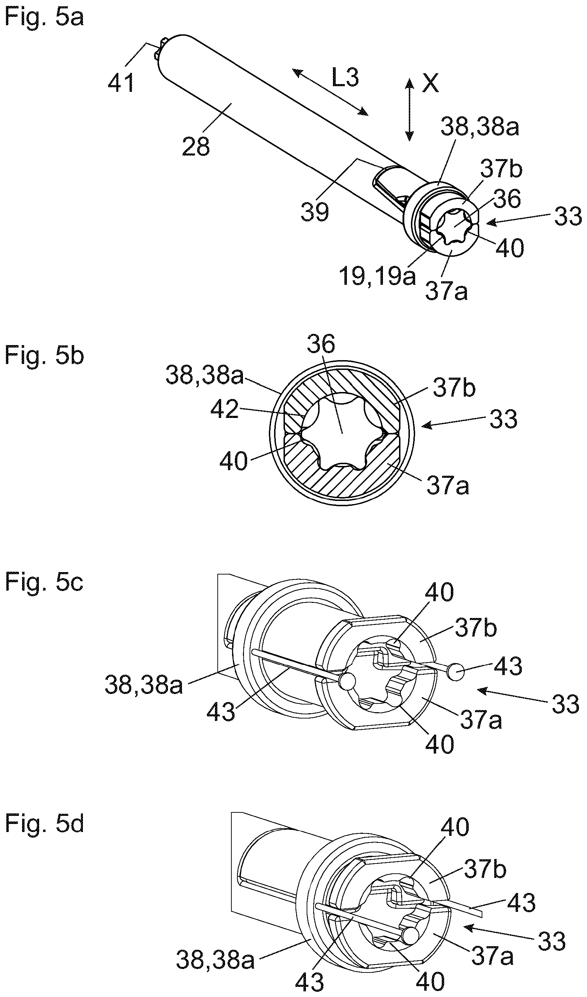

Fig. 5a-5d zeigen die Überlastsicherung 33 in verschiedenen Ansichten.

Fig. 5a zeigt eine perspektivische Darstellung der beiden Bauteile 37a, 37b der Überlastsicherung 33, wobei das Drehwerkzeug 36 in die beiden Bauteile 37a, 37b eingeführt ist. Durch eine Drehung des Drehwerkzeuges 36 ist zumindest eines der beiden Bauteile 37a, 37b antreibbar.

Das erste Bauteil 37a kann zusammen mit der Welle 28 einstückig ausgeführt sein. Alternativ ist es auch möglich, dass das erste Bauteil 37a und die Welle 28 als voneinander gesonderte Elemente ausgebildet sind.

Das erste Bauteil 37a kann wenigstens eine Verzahnung 41 aufweisen, durch welche eine Rotationsbewegung des ersten Bauteiles 37a auf andere Bauteile des Übertragungsmechanismus 35 des Möbelantriebes 4 übertragbar ist.

Das erste Bauteil 37a und das zweite Bauteil 37b können als voneinander separate Bauteile 37a, 37b ausgebildet sein. Alternativ ist es möglich, dass die beiden Bauteile 37a, 37b zusammen einstückig ausgebildet sind.

Beispielsweise kann vorgesehen sein, dass das erste Bauteil 37a und das zweite Bauteil 37b über wenigstens ein Filmscharnier 39 miteinander verbunden sind.

Durch das Halteelement 38 können die beiden Bauteile 37a, 37b bei einem Drehmoment, das unterhalb des Grenzdrehmomentes liegt, relativ zueinander in einer Koppelstellung gehalten werden, in welcher ein Drehmoment auf die Welle 28 übertragbar ist.

Das Einstellelement 19a der Einstellvorrichtung 19 kann wenigstens eine Betätigungskontur 40 aufweisen, vorzugsweise wobei die Betätigungskontur 40
- zumindest abschnittsweise ein Sechsrund-Profil aufweist, und/oder
- einen Durchmesser von weniger oder gleich 3,86 mm aufweist, und/oder
- nur am ersten Bauteil 37a angeordnet ist, und/oder
- zumindest bereichsweise am ersten Bauteil 37a und zumindest bereichsweise am zweiten Bauteil 37b angeordnet ist, und/oder
- an einer Stirnseite des Einstellelementes angeordnet ist.

Fig. 5b zeigt die Ausführungsform der Überlastsicherung 33 gemäß Fig. 5a in einem Querschnitt. Zu erkennen ist das in die beiden Bauteile 37a, 37b eingeführte Drehwerkzeug 36, wobei hier nur das erste Bauteil 37a eine Betätigungskontur 40 für das Drehwerkzeug 36 aufweist. Das zweite Bauteil 37b weist hingegen eine kreisrunde Innenkontur 42 auf. Somit wird eine Rotation des Drehwerkzeuges 36 nur auf das erste Bauteil 37a übertragen. Auf diese Weise kann ein geringeres Drehmoment übertragen werden, sodass das Grenzdrehmoment der Überlastsicherung 33 für verschiedene Anwendungen reduzierbar ist.

Fig. 5c zeigt ein Ausführungsbeispiel einer Überlastsicherung 33, wobei sich das Halteelement 38 in einer hinteren Endstellung relativ zu den beiden Bauteilen 37a, 37b befindet.

Das Halteelement 38 kann relativ zum ersten Bauteil 37a und/oder zweiten Bauteil 37b durch wenigstens eine Betätigungsvorrichtung 43 verschiebbar sein. Auf diese Weise lässt sich das Grenzdrehmoment der Überlastsicherung 33 einstellen.

Gemäß möglichen Ausführungsbeispielen kann vorgesehen sein, dass
- die wenigstens eine Betätigungsvorrichtung 43 aus einer Richtung parallel und/oder quer zur Längsrichtung L3 des ersten Bauteils 37a betätigbar ist, und/oder
- der Möbelantrieb 4 ein Gehäuse 9 aufweist, wobei die Überlastsicherung 33 im Gehäuse 9 angeordnet ist und das Halteelement 38 über die Betätigungsvorrichtung 43 von einer Außenseite des Gehäuses 9 aus betätigbar ist.

Vorzugsweise kann vorgesehen sein, dass das Halteelement 38 über die Betätigungsvorrichtung 43 bei einem an oder in der Möbelplatte 6 angeordneten Möbelantrieb 4 von der Stirnseite der Möbelplatte 6 aus für die manuelle Betätigung direkt zugänglich ist.

Die Betätigungsvorrichtung 43 kann beispielsweise ein verschiebbares und/oder drehbares Betätigungselement zur Einstellung einer Lage des Halteelementes 38 aufweisen. Das Betätigungselement der Betätigungsvorrichtung 43 kann beispielsweise am Gehäuse 9 des Möbelantriebes 4, vorzugsweise an der vorderen Stirnseite des Gehäuses 9, angeordnet sein.

Fig. 5d zeigt die Ausführungsform der Überlastsicherung 33 gemäß Fig. 5c, wobei sich das Halteelement 38, vorzugsweise in Form des Federelementes 38a, relativ zu den beiden Bauteilen 37a, 37b in einer vorderen Endstellung befindet. In der Stellung gemäß Fig. 5d ist im direkten Vergleich mit der Fig. 5c ein höheres Drehmoment übertragbar.

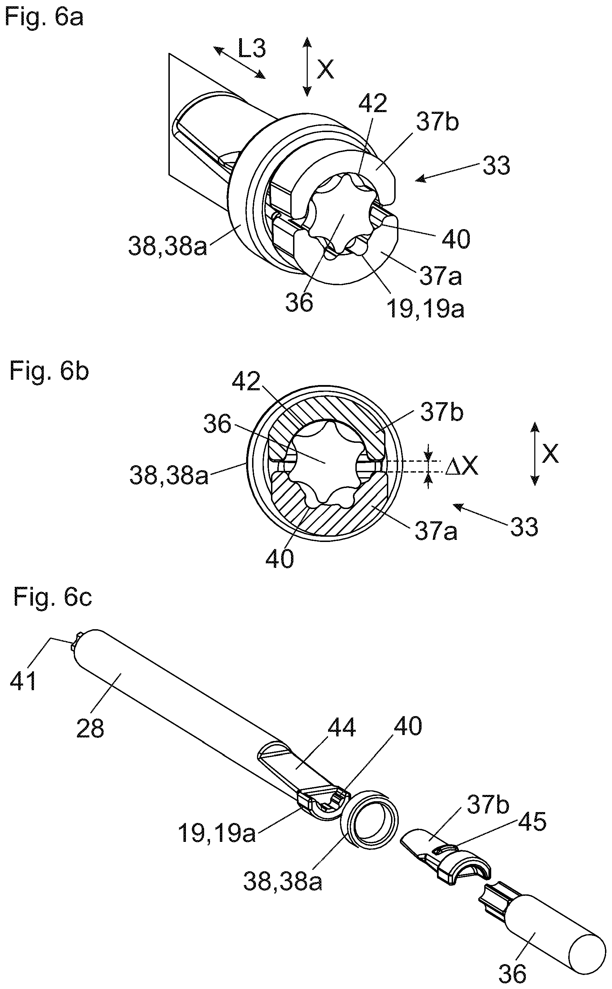

Fig. 6a zeigt eine perspektivische Ansicht der Überlastsicherung 33 in einer Entkoppelstellung, wobei die Übertragung eines Drehmomentes unterbrochen ist. Zu erkennen ist das in die beiden Bauteile 37a, 37b eingeführte Drehwerkzeug 36, welches hier mit einem Drehmoment oberhalb eines vorgegebenen Grenzdrehmomentes rotiert wird.

In diesem Fall rutscht das Drehwerkzeug 36 von der Betätigungskontur 40 des ersten Bauteiles 37a ab, wobei die Vorsprünge des Drehwerkzeuges 36 mit den korrespondierenden Vertiefungen der Betätigungskontur 40 nicht mehr in Eingriff stehen. Nach Auslösen einer durch das Halteelement 38 vorgegebenen Haltekraft wird das zweite Bauteil 37b vom ersten Bauteil 37a in Richtung X angehoben, wodurch die Übertragung eines Drehmomentes unterbrochen werden kann.

Das erste Bauteil 37a und das zweite Bauteil 37b sind relativ zueinander bei einem Drehmoment unterhalb des Grenzdrehmomentes in einer Koppelstellung und bei einem Drehmoment oberhalb des Grenzdrehmomentes in einer Entkoppelstellung angeordnet, wobei die beiden Bauteile 37a, 37b in der Entkoppelstellung in einer Richtung X quer zur Längsrichtung L3 des ersten Bauteiles 37a weiter voneinander beabstandet sind als in der Koppelstellung.

Fig. 6b zeigt die Überlastsicherung 33 gemäß Fig. 6a in einem Querschnitt. Zu erkennen ist, dass das zweite Bauteil 37b bei einer Überschreitung eines zulässigen Grenzdrehmomentes unter Bildung eines Spaltes um den Differenzbetrag ΔX relativ zum ersten Bauteil 37a in einer Richtung X quer zur Längsrichtung L3 des ersten Bauteiles 37a bewegt wurde und das Drehwerkzeug 36 nicht mehr in Eingriff mit der Betätigungskontur 40 des ersten Bauteiles 37a steht.

Fig. 6c zeigt die Überlastsicherung 33 in einer Explosionsansicht. Das erste Bauteil 37a kann wenigstens eine Ausnehmung 44 aufweisen, in welcher das zweite Bauteil 37b zumindest abschnittsweise anordenbar ist. Auf die Anordnung eines Filmscharniers 39 zur gelenkigen Verbindung der beiden Bauteile 37a, 37b kann jedoch grundsätzlich verzichtet werden.

Am ersten Bauteil 37a und/oder am zweiten Bauteil 37b kann wenigstens ein Anschlagelement 45 angeordnet sein, welches eine Bewegung des Halteelementes 38 in Längsrichtung L3 des ersten Bauteiles 37a begrenzt.

## Patentansprüche

1. Möbelantrieb (4) zum Bewegen eines relativ zu einem Möbelkorpus (2) bewegbar gelagerten Möbelteiles (3), umfassend:
- eine Einstellvorrichtung (19) mit wenigstens einem drehbar gelagerten Einstellelement (19a),
- einen Übertragungsmechanismus (35) zum Übertragen einer Kraft des Einstellelementes (19a),
- wenigstens eine Überlastsicherung (33), welche bei einer Drehung des Einstellelementes (19a) mit einem Drehmoment, das unterhalb eines vorgegebenen Grenzdrehmomentes liegt, das Einstellelement (19a) mit dem Übertragungsmechanismus (35) koppelt und welche bei einer Drehung des Einstellelementes (19a) mit einem Drehmoment, das oberhalb des Grenzdrehmomentes liegt, das Einstellelement (19a) vom Übertragungsmechanismus (35) entkoppelt, vorzugsweise sodass keine Drehmomentübertragung zwischen dem Einstellelement (19a) und dem Übertragungsmechanismus (35) stattfindet,
- -ein am Möbelkorpus (2) zu befestigendes Gehäuse (9) , wobei
das Einstellelement (19a) der Einstellvorrichtung (19) in einem montierten Zustand des Möbelantriebes (4) dem bewegbaren Möbelteil (3) zugewandt und in einem vorderen Bereich des Gehäuses (9) angeordnet ist, wobei das Einstellelement (19a) durch ein Werkzeug von vorne her bequem zu betätigen ist, **dadurch gekennzeichnet, dass** die Überlastsicherung (33) ein erstes Bauteil (37a) mit einer Längsrichtung (L3) und wenigstens ein zweites Bauteil (37b) aufweist, welches bei einem Drehmoment, das oberhalb des Grenzdrehmomentes liegt, zumindest in eine Richtung (X) quer zur Längsrichtung (L3) des ersten Bauteiles (37a) relativ zum ersten Bauteil (37a) bewegbar ist.

2. Möbelantrieb (4) nach Anspruch 1, wobei das erste Bauteil (37a) und/oder das zweite Bauteil (37b)
- zumindest abschnittsweise im Wesentlichen zylindrisch ausgebildet sind, und/oder
- gemeinsam eine im Wesentlichen zylindrische Form ausbilden, und/oder
- aus Kunststoff gebildet, und/oder
- in einem Spritzgussverfahren hergestellt sind.

3. Möbelantrieb (4) nach Anspruch 1 oder 2, wobei das erste Bauteil (37a) wenigstens eine Ausnehmung (44) aufweist, in welcher das zweite Bauteil (37b) zumindest abschnittsweise anordenbar ist.

4. Möbelantrieb (4) nach einem der Ansprüche 1 bis 3, wobei das erste Bauteil (37a) und das zweite Bauteil (37b) als voneinander separate Bauteile (37a, 37b) ausgebildet sind oder zusammen einstückig ausgebildet sind, vorzugsweise wobei das erste Bauteil (37a) und das zweite Bauteil (37b) über wenigstens ein Filmscharnier (39) miteinander verbunden sind.

5. Möbelantrieb (4) nach einem Ansprüche 1 bis 4, wobei wenigstens ein Halteelement (38) vorgesehen ist, welches das erste Bauteil (37a) und das zweite Bauteil (37b) bei einem Drehmoment, das unterhalb des Grenzdrehmomentes liegt, relativ zueinander in einer Koppelstellung hält, vorzugsweise wobei am ersten Bauteil (37a) und/oder am zweiten Bauteil (37b) wenigstens ein Anschlagelement (45) angeordnet ist, welches eine Bewegung des Halteelementes (38) in Längsrichtung (L3) des ersten Bauteiles (37a) begrenzt.

6. Möbelantrieb (4) nach Anspruch 5, wobei das wenigstens eine Halteelement (38) wenigstens ein Federelement (38a) umfasst, welches das zweite Bauteil (37b) in Richtung des ersten Bauteiles (37a) mit einer Kraft beaufschlagt, vorzugsweise wobei das Federelement (38a)
- zumindest abschnittsweise ringförmig ausgebildet ist, und/oder
- als O-Ring ausgebildet ist, und/oder
- zumindest abschnittsweise hohlzylindrisch ausgebildet ist, und/oder
- eine Breite zwischen 0,1 mm und 3,0 mm, vorzugsweise eine Breite von 2,0 mm aufweist, und/oder
- eine Wandstärke zwischen 0,1 mm und 2,0 mm, vorzugsweise eine Wandstärke von 1,0 mm aufweist, und/oder
- einen Außendurchmesser von weniger als 8,0 mm, bevorzugt von weniger als 7,5 mm, besonders bevorzugt von weniger als oder gleich 7,0 mm aufweist, und/oder
- aus Kunststoff, vorzugsweise POM und/oder TPU besteht, und/oder
- in einem Spritzgussverfahren hergestellt ist, und/oder
- zumindest abschnittsweise in eine radiale Richtung, vorzugsweise elastisch, dehnbar ist.

7. Möbelantrieb (4) nach Anspruch 5 oder 6, wobei das wenigstens eine Halteelement (38) zumindest abschnittsweise in Längsrichtung (L3) des ersten Bauteiles (37a) relativ zum ersten Bauteil (37a) und/oder zweiten Bauteil (37b) verschiebbar gelagert ist, vorzugsweise wobei das Grenzdrehmoment durch eine Verschiebung des wenigstens einen Halteelementes (38) einstellbar ist.

8. Möbelantrieb (4) nach Anspruch 7, wobei wenigstens eine Betätigungsvorrichtung (43) vorgesehen ist, durch welche das Halteelement (38) relativ zum ersten Bauteil (37a) und/oder zweiten Bauteil (37b) verschiebbar ist, vorzugsweise wobei
- die wenigstens eine Betätigungsvorrichtung (43) aus einer Richtung parallel und/oder quer zur Längsrichtung (L3) des ersten Bauteiles (37a) betätigbar ist, und/oder
- der Möbelantrieb (4) ein Gehäuse (9) aufweist, wobei die Überlastsicherung (33) im Gehäuse (9) angeordnet ist und das Halteelement (38) über die Betätigungsvorrichtung (43) von einer Außenseite des Gehäuses (9) aus betätigbar ist.

9. Möbelantrieb (4) nach einem der Ansprüche 1 bis 8, wobei die Überlastsicherung (33) derart ausgebildet ist, dass das Grenzdrehmoment zwischen 0,5 Nm und 4,0 Nm, vorzugsweise zwischen 0,8 Nm und 1,2 Nm, liegt.

10. Möbelantrieb (4) nach einem der Ansprüche 1 bis 9, wobei das erste Bauteil (37a) und das zweite Bauteil (37b) relativ zueinander bei einem Drehmoment unterhalb des Grenzdrehmomentes in einer Koppelstellung und bei einem Drehmoment oberhalb des Grenzdrehmomentes in einer Entkoppelstellung angeordnet sind, wobei die beiden Bauteile (37a, 37b) in der Entkoppelstellung in einer Richtung (X) quer zur Längsrichtung (L3) des ersten Bauteiles (37a) weiter voneinander beabstandet sind als in der Koppelstellung.

11. Möbelantrieb (4) nach einem der Ansprüche 1 bis 10, wobei das Einstellelement (19a) zusammen mit dem ersten Bauteil (37a) und/oder mit dem zweiten Bauteil (37b) einstückig ausgebildet ist, oder dass das Einstellelement (19a) und die beiden Bauteile (37a, 37b) voneinander gesondert ausgebildet sind.

12. Möbelantrieb (4) nach einem der Ansprüche 1 bis 11, wobei das Einstellelement (19a) wenigstens eine Betätigungskontur (40) aufweist, vorzugsweise wobei die Betätigungskontur (40)
- zumindest abschnittsweise ein Sechsrund-Profil aufweist, und/oder
- einen Durchmesser von weniger oder gleich 3,86 mm aufweist, und/oder
- nur am ersten Bauteil (37a) angeordnet ist, und/oder
- zumindest bereichsweise am ersten Bauteil (37a) und zumindest bereichsweise am zweiten Bauteil (37b) angeordnet ist, und/oder
- an einer Stirnseite des Einstellelementes (19a) angeordnet ist.

13. Möbelantrieb (4) nach einem der Ansprüche 1 bis 12, wobei der Möbelantrieb (4)
- eine Stellarmanordnung (5) mit wenigstens einem bewegbar gelagerten Stellarm (5a, 5b, 5c, 5d, 5e) zum Bewegen des bewegbaren Möbelteiles (3) aufweist,
- wenigstens eine Federvorrichtung (10) zur Kraftbeaufschlagung der Stellarmanordnung (5) aufweist, wobei die Federvorrichtung (10) über wenigstens eine Angriffsstelle (18) mit der Stellarmordnung (5) verbunden ist,
- wobei durch eine Drehung des Einstellelementes (19a) eine relative Lage der wenigstens einen Angriffsstelle (18) zur Stellarmanordnung (5) einstellbar ist.

14. Möbelantrieb (4) nach Anspruch 13, wobei der Möbelantrieb (4) wenigstens einen Gewindeabschnitt (17) mit einer Längsrichtung (L) aufweist, wobei die Angriffsstelle (18) der Federvorrichtung (10) entlang des Gewindeabschnittes (17) durch eine Drehung des Einstellelementes (19a) um eine Drehachse (R) einstellbar ist, vorzugsweise wobei die Drehachse (R) des Einstellelementes (19a) und die Längsrichtung (L) des Gewindeabschnittes (17) einen Winkel zueinander einschließen, wobei jener Winkel, den die Drehachse (R) des Einstellelementes (19a) und die Längsrichtung (L) des Gewindeabschnittes (17) zueinander einschließen, bei einer Bewegung der Stellarmanordnung (5) durch wenigstens eine winkelbewegliche Kupplungsvorrichtung (25) veränderbar ist.

15. Möbel (1) mit einem Möbelkorpus (2), einem relativ zum Möbelkorpus (2) bewegbar gelagerten Möbelteil (3) und mit zumindest einem Möbelantrieb (4) nach einem der Ansprüche 1 bis 14 zum Bewegen des bewegbaren Möbelteiles (3), vorzugsweise wobei der Möbelkorpus (2) eine Möbelplatte (6) zur Befestigung des Gehäuses (9) aufweist, wobei das Gehäuse (9) des Möbelantriebes (4) zumindest bereichsweise, vorzugsweise im Wesentlichen vollständig, innerhalb einer Aussparung (11) der Möbelplatte (6) aufgenommen ist.

## Claims

1. A furniture drive (4) for moving a furniture part (3) movably-supported relative to a furniture carcass (2), comprising:
- an adjustment device (19) having at least one rotatably-supported adjustment element (19a),
- a transmission mechanism (35) for transmitting a force of the adjustment element (19a),
- at least one overload safety device (33) configured to couple the adjustment element (19a) with the transmission mechanism (35) upon a rotation of the adjustment element (19a) with a torque below a predetermined limit torque, and being configured to decouple the adjustment element (19a) from the transmission mechanism (35) upon a rotation of the adjustment element (19a) with a torque above the limit torque, preferably such that no torque transmission between the adjustment element (19a) and the transmission mechanism (35) takes place,
- a housing (9) to be fixed to the furniture carcass (2), wherein the adjustment element (19a) of the adjustment device (19), in a mounted condition of the furniture drive (4), faces towards the movable furniture part (3) and is arranged on a front region of the housing (9), wherein the adjustment element (19a) can be conveniently operated from the front by using a tool,
**characterized in that** the overload safety device (33) includes a first component (37a) having a longitudinal direction (L3) and at least a second component (37b), the second component (37b) being configured to be moved at least in a direction (X) extending transversely to the longitudinal direction (L3) of the first component (37a) when the torque is above the limit torque.

2. The furniture drive (4) according to claim 1, wherein the first component (37a) and/or the second component (37b)
- is or are at least partially substantially cylindrical, and/or
- collectively form a substantially cylindrical shape, and/or
- is or are made of plastic, and/or
- is or are produced by an injection-molding process.

3. The furniture drive (4) according to claim 1 or 2, wherein the first component (37a) includes at least one recess (44) configured to at least partially receive the second component (37b) .

4. The furniture drive (4) according to one of the claims 1 to 3, wherein the first component (37a) and the second component (37b) are configured as components (37a, 37b) separate from each other, or are formed together so as to have an integral one-piece configuration, preferably wherein the first component (37a) and the second component (37b) are connected to each other via at least one film hinge (39).

5. The furniture drive (4) according to one of the claims 1 to 4, wherein at least one holding element (38) is provided, the holding element (38) being configured to hold the first component (37a) and the second component (37b) relative to each other in a coupling position when the torque is below the limit torque, preferably wherein at least one abutment element (45) is arranged on the first component (37a) and/or on the second component (37b), the at least one abutment element (45) being configured to limit a movement of the holding element (38) in the longitudinal direction (L3) of the first component (37a).

6. The furniture drive (4) according to claim 5, wherein the at least one holding element (38) includes at least one spring element (38a) configured to pressurize the second component (37b) in a direction of the first component (37a), preferably wherein the spring element (38a)
- is at least partially ring-shaped, and/or
- is configured as an O-ring, and/or
- is at least partially hollow cylindrical, and/or
- has a width between 0.1 mm and 3.0 mm, preferably a width of 2.0 mm, and/or
- has a wall thickness between 0.1 mm and 2.0 mm, preferably a wall thickness of 1.0 mm, and/or
- has an outer diameter of less than 8.0 mm, preferably of less than 7.5 mm, particularly preferable of less or equal than 7.0 mm, and/or
- consists of plastic, preferably POM and/or TPU, and/or
- is produced by an injection molding process, and/or
- is configured to be at least partially, preferably elastically, widened in a radial direction.

7. The furniture drive (4) according to claim 5 or 6, wherein the at least one holding element (38) is at least partially displaceably supported in the longitudinal direction (L3) of the first component (37a) relative to the first component (37a) and/or relative to second component (37a), preferably wherein the limit torque is adjustable by a displacement of the at least one holding element (38).

8. The furniture drive (4) according to claim 7, wherein at least one actuating device (43) is provided for displacing the holding element (38) relative to the first component (37a) and/or relative to the second component (37b), preferably wherein
- the at least one actuating device (43) is configured to be actuated from a direction extending parallel and/or transversely to the longitudinal direction (L3) of the first component (37a), and/or
- the furniture drive (4) includes a housing (9), wherein the overload safety device (33) is arranged in the housing (9), and the holding element (38) can be actuated from an external side of the housing (9) via the actuating device (43).

9. The furniture drive (4) according to one of the claims 1 to 8, wherein the overload safety device (33) is configured such that the limit torque is between 0.5 Nm and 4.0 Nm, preferably between 0.8 Nm and 1.2 Nm.

10. The furniture drive (4) according to one of the claims 1 to 9, wherein the first component (37a) and the second component (37a) are arranged relative to each other in a coupling position when the torque is below the limit torque, and are arranged in a decoupling position when the torque is above the limit torque, wherein the two components (37a, 37b), in the decoupling position, are further spaced apart from each other in a direction (X) extending transversely to the longitudinal direction (L3) of the first component (37a) than in the coupling position.

11. The furniture drive (4) according to one of the claims 1 to 10, wherein the adjustment element (19a) and the first component (37a) and/or the second component (37a) are formed together so as to have an integral one-piece configuration, or that the adjustment element (19a) and the two components (37a, 37b) are separate from each other.

12. The furniture drive (4) according to one of the claims 1 to 11, wherein the adjustment element (19a) includes at least one actuating contour (40), preferably wherein the actuating contour (40)
- includes at least partially a hexagon-profile, and/or
- has a diameter of less or equal than 3.86 mm, and/or
- is only arranged on the first component (37a), and/or
- is at least partially arranged on the first component (37a) and at least partially on the second component (37b), and/or
- is arranged on a front face of the adjustment element (19a).

13. The furniture drive (4) according to one of the claims 1 to 12, wherein the furniture drive (4)
- includes an actuating arm assembly (5) having at least one movably-supported actuating arm (5a, 5b, 5c, 5d, 5e) for moving the movable furniture part (3),
- includes at least one spring device (10) for applying a force to the actuating arm assembly (5), wherein the spring device (10) is connected to the actuating arm assembly (5) via at least one engagement location (18),
- wherein upon a rotation of the adjustment element (19a), a relative position of the at least one engagement location (18) with respect to the actuating arm assembly (5) is adjustable.

14. The furniture drive (4) according to claim 13, wherein the furniture drive (4) includes at least one threaded portion (17) having a longitudinal direction (L), wherein the engagement location (18) of the spring device (10) along the threaded portion (17) is adjustable by rotating the adjustment element (19a) about a rotational axis (R), preferably wherein the rotational axis (R) of the adjustment element (19a) and the longitudinal direction (L) of the threaded portion (17) enclose an angle relative to each other, wherein that angle, that the rotational axis (R) of the adjustment element (19a) and the longitudinal direction (L) of the threaded portion (17) enclose relative to each other, can be varied by an angularly-movable coupling device (25) upon a movement of the actuating arm assembly (5).

15. An item of furniture (1) comprising a furniture carcass (2), a furniture part (3) movably-supported relative to the furniture carcass (2), and at least one furniture drive (4) according to one of the claims 1 to 14 for moving the movable furniture part (3), preferably wherein the furniture carcass (2) includes a furniture panel (6) for fixing the housing (9), wherein the housing (9) of the furniture drive (4) is at least partially, preferably substantially entirely, received within a recess (11) of the furniture panel (6).

## Revendications

1. Entraînement de meuble (4) pour déplacer une partie de meuble (3) montée de manière à pouvoir être déplacée par rapport à un corps de meuble (2), comprenant:
- un dispositif de réglage (19) avec au moins un élément de réglage (19a) monté de manière à pouvoir tourner,
- un mécanisme de transmission (35) pour transmettre une force de l'élément de réglage (19a),
- au moins un dispositif de protection contre les surcharges (33) qui, lors d'une rotation de l'élément de réglage (19a) avec un couple de rotation, qui est inférieur à un couple limite prédéfini, couple l'élément de réglage (19a) au mécanisme de transmission (35) et qui, lors d'une rotation de l'élément de réglage (19a) avec un couple de rotation, qui est supérieur au couple de rotation limite, découple l'élément de réglage (19a) du mécanisme de transmission (35), de préférence si bien qu'aucune transmission de couple de rotation n'ait lieu entre l'élément de réglage (19a) et le mécanisme de transmission (35),
- un boîtier (9) à fixer sur le corps de meuble (2), dans lequel l'élément de réglage (19a) du dispositif de réglage (19) est tourné vers la partie mobile de meuble (3) dans un état monté de l'entraînement de meuble (4) et est disposé dans une zone avant du boîtier (9), dans lequel l'élément de réglage (19a) peut être actionné confortablement par l'avant à l'aide d'un outil,
**caractérisé en ce que** le dispositif de protection contre les surcharges (33) présente un premier composant (37a) avec une direction longitudinale (L3) et au moins un deuxième composant (37b) qui, à un couple de rotation supérieur au couple de rotation limite, peut être déplacé au moins dans une direction (X) transversalement par rapport à la direction longitudinale (L3) du premier composant (37a) par rapport au premier composant (37a).

2. Entraînement de meuble (4) selon la revendication 1, dans lequel le premier composant (37a) et/ou le deuxième composant (37b)
- sont essentiellement cylindriques au moins par sections, et/ou
- forment ensemble une forme sensiblement cylindrique, et/ou
- sont formés à partir de matière plastique, et/ou
- sont fabriqués dans un procédé de moulage par injection.

3. Entraînement de meuble (4) selon la revendication 1 ou 2, dans lequel le premier composant (37a) présente au moins un évidement (44) dans lequel le deuxième composant (37b) peut être disposé au moins par sections.

4. Entraînement de meuble (4) selon l'une quelconque des revendications 1 à 3, dans lequel le premier composant (37a) et le deuxième composant (37b) sont formés comme des composants (37a, 37b) séparés l'un de l'autre ou sont formés ensemble d'une seule pièce, de préférence dans lequel le premier composant (37a) et le deuxième composant (37b) sont reliés entre eux par au moins une charnière à film (39).

5. Entraînement de meuble (4) selon l'une quelconque des revendications 1 à 4, dans lequel au moins un élément de maintien (38) est prévu, lequel maintient le premier composant (37a) et le deuxième composant (37b) dans une position de couplage relativement l'un par rapport à l'autre à un couple de rotation inférieur au couple de rotation limite, de préférence dans lequel au moins un élément de butée (45) est disposé sur le premier composant (37a) et/ou sur le deuxième composant (37b), lequel limite un mouvement de l'élément de maintien (38) dans le sens longitudinal (L3) du premier composant (37a).

6. Entraînement de meuble (4) selon la revendication 5, dans lequel l'au moins un élément de maintien (38) comprend au moins un élément à ressort (38a), lequel applique une force sur le deuxième composant (37b) en direction du premier composant (37a), de préférence dans lequel l'élément à ressort (38a)
- est de forme annulaire au moins par sections, et/ou
- est formé comme un joint torique, et/ou
- est de forme cylindrique creuse au moins par sections, et/ou
- présente une épaisseur de paroi comprise entre 0,1 mm et 2,0 mm, de préférence une épaisseur de paroi de 1,0 mm, et/ou
- présente un diamètre extérieur inférieur à 8,0 mm, de préférence inférieur à 7,5 mm, de manière particulièrement préférée inférieur ou égal à 7,0 mm, et/ou
- est constitué de matière plastique, de préférence de POM et/ou de TPU, et/ou
- est fabriqué dans un procédé de moulage par injection, et/ou
- est extensible au moins par sections dans une direction radiale, de préférence élastiquement.

7. Entraînement de meuble (4) selon la revendication 5 ou 6, dans lequel l'au moins un élément de maintien (38) est monté de manière déplaçable au moins par sections dans le sens longitudinal (L3) du premier composant (37a) par rapport au premier composant (37a) et/ou au deuxième composant (37b), de préférence dans lequel le couple de rotation limite peut être réglé par un déplacement de l'au moins un élément de maintien (38).

8. Entraînement de meuble (4) selon la revendication 7, dans lequel au moins un dispositif d'actionnement (43) est prévu, par lequel l'élément de maintien (38) est déplaçable par rapport au premier composant (37a) et/ou au deuxième composant (37b), de préférence dans lequel
- l'au moins un dispositif d'actionnement (43) peut être actionné depuis une direction parallèlement et/ou transversalement à la direction longitudinale (L3) du premier composant (37a), et/ou
- l'entraînement de meuble (4) présente un boîtier (9), dans lequel le dispositif de protection contre les surcharges (33) est disposé dans le boîtier (9) et l'élément de maintien (38) peut être actionné par l'intermédiaire du dispositif d'actionnement (43) à partir d'un côté extérieur du boîtier (9).

9. Entraînement de meuble (4) selon l'une quelconque des revendications 1 à 8, dans lequel le dispositif de protection contre les surcharges (33) est formé de telle manière que le couple de rotation limite se situe entre 0,5 Nm et 4,0 Nm, de préférence entre 0,8 Nm et 1,2 Nm.

10. Entraînement de meuble (4) selon l'une quelconque des revendications 1 à 9, dans lequel le premier composant (37a) et le deuxième composant (37b) sont disposés relativement l'un par rapport à l'autre dans une position d'accouplement à un couple de rotation inférieur au couple de rotation limite et dans une position de désaccouplement à un couple de rotation supérieur au couple de rotation limite, dans lequel les deux composants (37a, 37b) sont davantage espacés l'un de l'autre dans la position de désaccouplement dans une direction (X) transversalement à la direction longitudinale (L3) du premier composant (37a) que dans la position d'accouplement.

11. Entraînement de meuble (4) selon l'une quelconque des revendications 1 à 10, dans lequel l'élément de réglage (19a) est formé d'une seule pièce conjointement avec le premier composant (37a) et/ou avec le deuxième composant (37b), ou dans lequel l'élément de réglage (19a) et les deux composants (37a, 37b) sont formés séparément l'un de l'autre.

12. Entraînement de meuble (4) selon l'une quelconque des revendications 1 à 11, dans lequel l'élément de réglage (19a) présente au moins un contour d'actionnement (40), de préférence dans lequel le contour d'actionnement (40)
- présente au moins par sections un profil hexagonal, et/ou
- présente un diamètre inférieur ou égal à 3,86 mm, et/ou
- n'est disposé que sur le premier composant (37a), et/ou
- est disposé au moins par endroits sur le premier composant (37a) et au moins par endroits sur le deuxième composant (37b), et/ou
- est disposé sur une face frontale de l'élément de réglage (19a) .

13. Entraînement de meuble (4) selon l'une quelconque des revendications 1 à 12, dans lequel l'entraînement de meuble (4)
- présente un ensemble de bras de réglage (5) avec au moins un bras de réglage (5a, 5b, 5c, 5d, 5e) monté de manière mobile pour déplacer la partie mobile de meuble (3),
- présente au moins un dispositif à ressort (10) d'application de force sur l'ensemble de bras de réglage (5), dans lequel le dispositif à ressort (10) est relié à l'ensemble de bras de réglage (5) par l'intermédiaire d'au moins un point d'attaque (18),
- dans lequel une rotation de l'élément de réglage (19a) permet de régler une position relative de l'au moins un point d'attaque (18) par rapport à l'ensemble de bras de réglage (5).

14. Entraînement de meuble (4) selon la revendication 13, dans lequel l'entraînement de meuble (4) présente au moins une section filetée (17) avec une direction longitudinale (L), dans lequel le point d'attaque (18) du dispositif à ressort (10) est réglable le long de la section filetée (17) par une rotation de l'élément de réglage (19a) autour d'un axe de rotation (R), de préférence dans lequel l'axe de rotation (R) de l'élément de réglage (19a) et la direction longitudinale (L) de la section filetée (17) forment un angle l'un par rapport à l'autre, dans lequel cet angle, que forment l'axe de rotation (R) de l'élément de réglage (19a) et la direction longitudinale (L) de la section filetée (17) l'un par rapport à l'autre, est modifiable lors d'un mouvement de l'ensemble de bras de réglage (5) par au moins un dispositif d'accouplement (25) mobile de manière angulaire.

15. Meuble (1) avec un corps de meuble (2), une partie de meuble (3) montée de manière mobile par rapport au corps de meuble (2) et avec au moins un entraînement de meuble (4) selon l'une quelconque des revendications 1 à 14 pour déplacer la partie mobile de meuble (3), de préférence dans lequel le corps de meuble (2) présente une plaque de meuble (6) pour la fixation du boîtier (9), dans lequel le boîtier (9) de l'entraînement de meuble (4) est logé au moins par endroits, de préférence sensiblement totalement, à l'intérieur d'un évidement (11) de la plaque de meuble (6).
